# EUROPEAN PATENT APPLICATION

(11) **EP 4 749 387 A1**
(43) Date of publication of application: **27.05.2026**
(21) Application number: 25216168.2
(22) Date of filing: 17.11.2025
(51) Int. Cl.: G05D 16/10, B05B 1/00, F04B 1/00

(54) **VALVE ASSEMBLY FOR PUMPS**

(30) Priority: 22.11.2024 IT 202400026337
(71) Applicant: Annovi Reverberi S.p.A., 41122 Modena (IT)
(72) Inventor: RINIERI, Alessio, 41037 Mirandola (MO) (IT)
(74) Representative: AVERA-IP SRL

(57) **Abstract**

A valve assembly (35) for pumps (10) is described, comprising:
a first chamber (45) adapted to be placed in fluidic communication with an inlet duct (A), a second chamber (50) communicating with the first chamber (45) via a first valve seat (55), the second chamber being adapted to be placed in fluidic communication with an outlet duct (B), a first shutter body (60) housed in the second chamber (50) and movable between a closed position, in which it closes the first valve seat (55), and an open position, in which it opens the first valve seat (55), a first resilient element (65) adapted to push the first shutter body (60) towards the closed position in contrast to the pressure present in the first chamber (45), a discharge duct (110) communicating with the first chamber via a second valve seat (115), a third chamber (130) communicating with the second chamber (50) and partially delimited by a sliding plunger (140), a second shutter body (125) connected to the plunger (140) and housed in the first chamber (45) where it is movable between a closed position, in which it closes the second valve seat (115), and an open position, in which it opens the second valve seat (115), and a second resilient element (155) adapted to push the second shutter body (125) towards the closed position in contrast to the pressure present in the third chamber (130), an additional chamber (175) at least partially formed in the plunger (140) and placed in fluidic communication with the third chamber (130) by means of an additional valve seat (180), the additional chamber (175) also having an outlet port (215) by means of which it is in fluidic communication with the first chamber (45).

## Description

### TECHNICAL FIELD

The present invention concerns a valve assembly for pumps, for example for piston or plunger positive displacement pumps that can be installed on pressure washers or other machines for distributing and/or delivery pressurized fluids (typically water).

### PRIOR ART

As is known, pumps, particularly piston or plunger positive displacement pumps, are generally provided with an inlet manifold connected to a tank of the fluid to be pumped, and with a delivery manifold adapted to be connected to a fluid delivery device, for example generally in the form of a delivery lance or gun.

Between the delivery manifold and the delivery device, these pumps comprise a regulating valve assembly, which is fluidically interposed between the delivery manifold and the delivery device, in order to regulate the delivery pressure.

Conventionally, said regulating valve assembly is fluidically connected by means of an inlet duct to the delivery manifold, and fluidically connected by means of an outlet duct, for example of the type of a hose, to the delivery device such as for example a lance or gun.

The control valve assembly comprises, as is known, a first chamber communicating with the inlet duct and a second chamber communicating with the first chamber and with the outlet duct.

In the second chamber there is housed a first shutter body which, pushed by a spring, is normally adapted to cooperate with a first valve seat to close the communication between the first chamber and the second chamber.

As the flow rate of fluid that is pumped into the first chamber of the valve assembly also increases, the pumped fluid pushes the first shutter body towards the open position, in contrast to the action of the spring, thus flowing into the second chamber and from there into the outlet duct, for example, until it is delivered by the delivery device

When fluid delivery is terminated, for example the delivery lance or gun is closed, the fluid that cannot be delivered acts on the first shutter body assisted by the spring, so as to bring it into the closed position.

In this situation the pressure value inside the second chamber is particularly high, for example generally equal to or higher than 100 bar.

Such high pressure is undesirable, both for safety reasons and for issues of wear of the components subjected to such stress.

For this reason, the valve assemblies of the prior art may comprise so-called zero valves. These zero valves are associated with the second chamber, so that, when fluid delivery is prevented, they open and allow the discharge of the fluid trapped in the second chamber until the pressure inside the second chamber and in the outlet duct connected to it is returned to 0.

Although the presence of such a zero valve is useful in order to solve the above problem, a known problem is that their presence and their fluidic connection to the remaining components of the valve assembly makes the architecture of the valve assembly itself complex and also entails a considerable increase in the overall size of the valve assembly. In light of the foregoing, it is an object of the present invention to overcome this drawback of the prior art.

It is a further object of the present invention to achieve such object within the scope of a simple and rational solution.

These objects are achieved by the characteristics of the invention reported in the independent claims.

The dependent claims outline preferred and/or particularly advantageous aspects of the invention.

### DISCLOSURE OF THE INVENTION

In particular, the invention makes available a valve assembly for pumps comprising:
- a first chamber adapted to be placed in fluidic communication with an inlet duct,
- a second chamber communicating with the first chamber via a first valve seat, the second chamber being adapted to be placed in fluidic communication with an outlet duct,
- a first shutter body housed in the second chamber and movable between a closed position, in which it closes the first valve seat, and an open position, in which it opens the first valve seat,
- a first resilient element adapted to push the first shutter body towards the closed position in contrast to the pressure present in the first chamber,
- a discharge duct communicating with the first chamber via a second valve seat,
- a third chamber communicating with the second chamber and partially delimited by a sliding plunger,
- a second shutter body connected to the plunger and housed in the first chamber where it is movable between a closed position, in which it closes the second valve seat, and an open position, in which it opens the second valve seat, and
- a second resilient element adapted to push the second shutter body towards the closed position in contrast to the pressure present in the third chamber.
- an additional chamber at least partially formed in the plunger and placed in fluidic communication with the third chamber by means of an additional valve seat, the additional chamber also having an outlet port by means of which it is in fluidic communication with the first chamber,
- an additional shutter body housed in the additional chamber where it is movable between a closed position, in which it closes the additional valve seat, and an open position, in which it opens the additional valve seat, and
- an additional resilient element adapted to push the additional shutter body towards the closed position (for example in contrast to the pressure present in the third chamber).

Thanks to this solution, the invention makes available a valve assembly capable of de-pressurising the second chamber, and therefore the third chamber, by discharging part of the fluid into the additional chamber, with a slim architecture and which allows the overall size of the valve assembly to be kept to a minimum.

The additional resilient element is configured to push the additional shutter body into the closed position in contrast to the pressure in the third chamber.

In particular, for example, one aspect of the invention provides that the additional shutter body can be positioned (pushed by the additional resilient element) in the closed position if the pressure difference between upstream and downstream of the additional shutter body itself (considering the third upstream chamber and the additional downstream chamber, i.e. if the pressure difference between upstream and downstream of the additional valve seat considering the third upstream chamber and the additional downstream chamber) is less than (or equal to) a threshold value while it is positioned in the open position if the pressure upstream of the additional shutter body (i.e. in the third chamber) is greater than the pressure downstream of the additional shutter body (i.e. in the additional chamber) and the pressure difference assumes a value greater than said threshold value.

In other words, it is possible to provide that the additional shutter body can be positioned (pushed by the additional resilient element) in the closed position if the pressure difference between the third chamber and the additional chamber is less than or equal to a threshold value and that it can be positioned in the open position if the pressure in the third chamber is greater than the pressure in the additional chamber and the pressure difference assumes a value greater than said threshold value.

Thanks to this solution, since the third chamber is in fluidic communication with the second chamber and the additional chamber is in fluidic communication with the first chamber, the additional shutter body can be positioned (pushed by the additional resilient element) in the closed position if the pressure difference between the second chamber and the first chamber is less than or equal to a threshold value while it can be positioned in the open position if the pressure in the second chamber is greater than the pressure in the first chamber and the pressure difference assumes a value greater than said threshold value.

Such a condition whereby the pressure in the third chamber is greater than the pressure in the additional chamber, i.e. in which the pressure in the second chamber is greater than the pressure in the first chamber, may in particular be created when the fluid delivery is interrupted.

In this situation, the fluid that remains trapped in the second chamber, and therefore in the third chamber communicating with it, causes the pressure inside the second chamber and the third chamber to rise, resulting in a pressure difference with respect to the additional chamber and therefore to the first chamber greater than said threshold value.

Another aspect of the invention provides that the additional chamber can also be at least partially formed in the second shutter body and that said outlet port can be formed in the second shutter body itself.

Yet another aspect of the invention provides that the plunger may have an inner channel that makes available at least a portion of the third chamber and at least a portion of the additional chamber.

Thanks to this solution, the plunger is more sensitive to the pressure in the third chamber and the valve assembly is generally more effective.

Another aspect of the invention provides that said second shutter body can have the shape of a cup-shaped body, a mouth of which is attached (fluid-tightly) to the plunger (for example at an end of the plunger housed in the first chamber), and that it can define a cavity (which for example makes available a portion of the additional chamber), which for example opens onto the first chamber by means of said outlet port, which is in fluidic communication with an inner channel formed in the plunger.

A further aspect of the invention provides that the additional chamber, by means of said outlet port, can be in continuous fluidic (e.g. direct) communication with the first chamber. Thanks to this solution, the additional chamber and the first chamber are placed at the same pressure.

Thanks to this solution, the architecture is optimized, in fact it allows, when needed, to reduce the pressure of the second chamber by exploiting the third chamber and the plunger to create, with the same overall space, an additional selective fluidic communication between the second chamber and the first chamber, when the first shutter body is in the closed position, and therefore between the second chamber and the discharge duct.

In light of this, when the first shutter body is in the open position, and the fluid is delivered, the first chamber and the second chamber are substantially at the same pressure and therefore, likewise, the third chamber and the additional chamber are at the same pressure.

Therefore, during the delivery step, the additional shutter body remains in the closed position and does not affect the delivery.

When otherwise the first shutter body moves into the closed position, the pressure in the second chamber and therefore also in the third chamber moves to a greater value than the pressure in the first chamber and therefore also in the additional chamber, in particular higher than the threshold value.

Then, the additional shutter body moves into the open position allowing the pressure inside the second chamber and also the third chamber to be decreased.

Still, a further aspect of the invention provides that the valve assembly may comprise a valve body that makes said additional valve seat available, and that the additional shutter and the additional resilient element may be inserted (and housed) within the valve body, and that said valve body may be inserted within the plunger (i.e. in the inner channel thereof).

Thanks to this solution, the assembly of the valve assembly is particularly simple.

In fact, the valve body with the additional shutter and the resilient element can be assembled separately and then inserted, en bloc, into the plunger, that is within a channel formed in it.

A further aspect of the invention provides that the additional shutter can be movable, in contrast to the elastic force of the additional resilient element, from the closed position to the open position if the pressure in the third chamber (i.e. in the second chamber) is greater than the pressure in the additional chamber and the pressure difference between the third chamber and the additional chamber is higher than a threshold value (and is positioned in said closed position when the pressure difference between the third chamber and the additional chamber assumes said threshold value or a value lower than the threshold value).

Another aspect of the invention provides that said threshold value may be greater than or equal to 5 bar, for example comprised between 6 and 70 bar (extremes included).

For example, another aspect of the invention provides that said threshold value may preferably be greater than or equal to 15 bar, for example comprised between 16 and 70 bar (extremes included).

Yet, for example, another aspect of the invention may provide that said threshold value may preferably be greater than or equal to 25 bar, for example that it may be comprised between 26 and 70 bar extremes included (possibly between 26 and 55 bar extremes included).

For example, a further aspect of the invention may provide that said threshold value may be equal to or greater than 30 bar, for example comprised between 30 and 70 bar (extremes included), for example comprised between 31 and 70 bar (extremes included), optionally comprised between 31 and 60 bar (extremes included), possibly comprised between 30 and 55 bar, optionally for example comprised between 31 and 55 bar (extremes included).

Yet, for example, another aspect of the invention may provide that said threshold value may be comprised between 40 and 60 bar (extremes included), even more preferably comprised between 45 and 55 bar (extremes included).

Yet another aspect of the invention provides that the valve assembly may comprise an actuating system configured to (i.e. adapted to) turn off a motor actuating the pump when the pressure difference between the second chamber and the first chamber is (i.e. assumes a value) greater than or equal to a critical value, and that said critical value may be lower than the threshold value.

Another aspect of the invention provides that between the threshold value and the critical value there may be a difference of at least 1 bar, for example a difference preferably comprised between 2 and 40 bar, for example a difference at least equal to 10 bar, for example a difference even more preferably comprised between 10 and 35 bar (extremes included).

A further aspect of the invention provides that said critical value may have a value comprised between 1 bar and 25 bar (extremes included), for example preferably comprised between 15 bar and 25 bar (extremes included).

The invention furthermore makes available a pump comprising a valve assembly according to one or more of (e.g. all of) the aspects described above.

Another aspect of the invention provides that said pump may comprise:
- a pump body, defining one or more cylinders, and a cylinder head, attached to the pump body and adapted to close one end of each cylinder, with a reciprocating piston being slidably housed inside each cylinder,
- an inlet manifold adapted to be connected to a source of fluid to be pumped,
- a delivery manifold adapted to be connected to a pumped fluid delivery device,
- a motor actuating said one or more reciprocating pistons,
and that the valve assembly can be connected to the delivery manifold (for example by means of said inlet duct) to receive the fluid therefrom.

The invention furthermore makes available a pressure washer comprising:
- a pump as described above, and
- a delivery device fluidically connected to the second chamber of the valve assembly to receive the fluid therefrom.

### BRIEF DESCRIPTION OF THE DRAWINGS

Additional features and advantages of the invention will be more apparent after reading the following description provided by way of a non-limiting example, with the aid of the figures illustrated in the attached drawings.

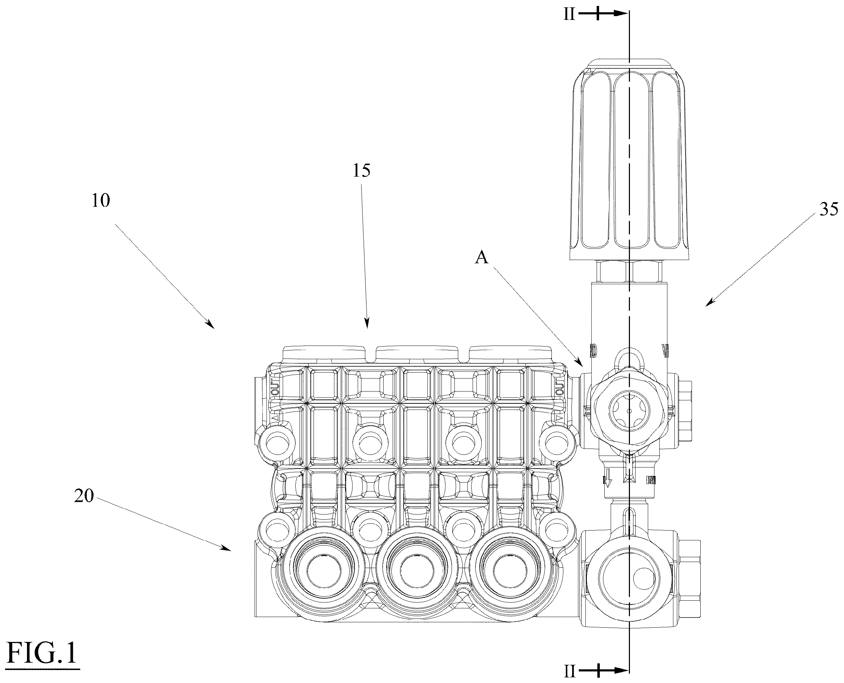

Figure 1 is a view of a pump provided with a valve assembly according to the invention.
Figure 2 is a sectional view along line II-II of Figure 1 of the valve assembly, and an enlargement in which an additional shutter body is better visible in a respective closed position.
Figure 3 is the view of figure 2 in a subsequent step, in particular a delivery step, in which a first shutter body is in a respective open position and the additional shutter body is in a respective closed position with a switch and motor also schematically illustrated, and an enlargement that better shows said closed position of the additional shutter body.
Figure 4 is the view of Figure 3 in a subsequent step of operation in which the first shutter body has moved to a respective closed position and the additional shutter body has moved to a respective open position and an enlargement in which said positioning can be better appreciated.
Figure 5 is the view of Figure 4 in a still subsequent step of operation in which the additional shutter body has moved back to its respective closed position and an enlargement in which said positioning is better visible.
Figure 6 is an enlarged view of the portion VI of figure 2.
Figure 7 is a schematic view in which the section of the valve assembly of Figure 2-5 with an outlet duct and a delivery device connected to the valve assembly is visible.

### BEST MODE TO IMPLEMENT THE INVENTION

With particular reference to these figures, a pump, for example particularly a positive displacement piston pump 10 or a plunger pump, which can be installed for example on a pressure washer or on another machine or plant for the distribution and/or delivery of pressurized fluids (typically water), is indicated globally with reference 10.

The pump 10 comprises a pump body 15, defining one or more cylinders, and a cylinder head 20, attached to the pump body 15 and adapted to close one end of each cylinder. A reciprocating piston is slidably housed within each cylinder and which is adapted to define, together with the corresponding cylinder and the cylinder head 20, a respective variable volume compression chamber.

The pistons can therefore be kinematically connected to a single transmission shaft through respective kinematics, for example a crank-rod kinematics, which is adapted to transform the rotary movement of the transmission shaft into a reciprocating linear movement of the piston.

The transmission shaft may be rotated by an actuating motor M (illustrated only schematically), for example by an electric motor or alternatively by an inner combustion engine. The cylinders, the pistons, the compression chambers and the transmission shaft are not illustrated or visible in the figures since they are known and conventional in themselves. The pump 10 comprises an inlet manifold 25 and a delivery manifold 30, both of which can be formed in the cylinder head 20.

For example, each compression chamber may be connected to the inlet manifold 25 via a respective inlet valve and to the delivery manifold 30 via a respective delivery valve.

The inlet and delivery valves can be automatic valves and are conventional in themselves. The inlet manifold 25 can be connected to a source of fluid to be pumped, for example to a tank containing the fluid or alternatively to a fluid supply network (for example the water network), while the delivery manifold 30 can be connected to a delivery device G, for example to a delivery gun or lance.

Obviously, the type of delivery device G is not limited to that listed above but may vary depending on the application, i.e. the machine or plant or other system, on which the pump 10 is installed.

The delivery device G can be provided with special valve members, which can be controlled for example by means of a trigger or button, adapted to selectively open and close the fluid delivery following a manual operation.

A valve assembly, indicated globally by reference numeral 35, can be fluidically (e.g. hydraulically) interposed between the delivery manifold 30 and the delivery device G.

The valve assembly 35 may first of all comprise a rigid (e.g. metallic) valve body 40 defining a space for receiving the fluid and for it to flow which arrives from the delivery manifold 30.

The valve body 40 defines a cavity within which the fluid it receives from the delivery manifold is received and flows.

For example, the valve body 40 can be substantially defined by a multi-way tubular body or joint, for example three-way or four-way or more, which has an inner cavity within which the fluid is received and flows in the manners that will become clearer hereinafter.

The valve assembly 35 has a first chamber 45, for example defined in the valve body 40, which is adapted to be placed in fluidic communication with an inlet duct A for receiving said fluid from the delivery manifold 30.

In particular, the first chamber 45 can be in constant hydraulic communication with the delivery manifold 30 via said inlet duct A which is for example fluidically connected (sealingly) to the valve body 40 (for example directly connected to a respective one of said ways thereof).

The first chamber 45 is then adapted to receive the fluid arriving from the delivery manifold of the pump.

In the illustrated embodiment, the inlet duct A may coincide with (i.e. be made available by) an end section of the delivery manifold 30.

The valve assembly 35 further comprises a second chamber 50, for example defined in the valve body 40, which is in fluidic (e.g. hydraulic) communication with the first chamber 45 via a first valve seat 55.

It should be specified that, within the scope of the present description, valve seat generically means any passage, opening or hole, of any shape and size, which is adapted to place two separate volumes in fluidic or hydraulic communication and is adapted to be obstructed by a corresponding shutter body, to selectively prevent such communication. Inside the second chamber 50 there is housed a first shutter body 60, which is movable between a closed position, in which it closes the first valve seat 55 preventing communication between the first chamber 45 and the second chamber 50, and an open position, in which it opens the first valve seat 55 allowing communication between said first chamber 45 and said second chamber 50.

The first shutter body 60 can be constantly pushed towards the closed position by a first resilient element 65, for example by a spring, which acts in contrast with the pressure of the fluid in the first chamber 45.

The second chamber 50 is adapted to be placed in fluidic communication with an outlet duct B which can be adapted to be connected for example with the delivery device G, for example said delivery lance or gun, for the delivery of the fluid.

The valve assembly 35 may possibly comprise a coupling sleeve 70 (or delivery sleeve), which is adapted to place the second chamber 50 in fluidic communication with the outlet duct B.

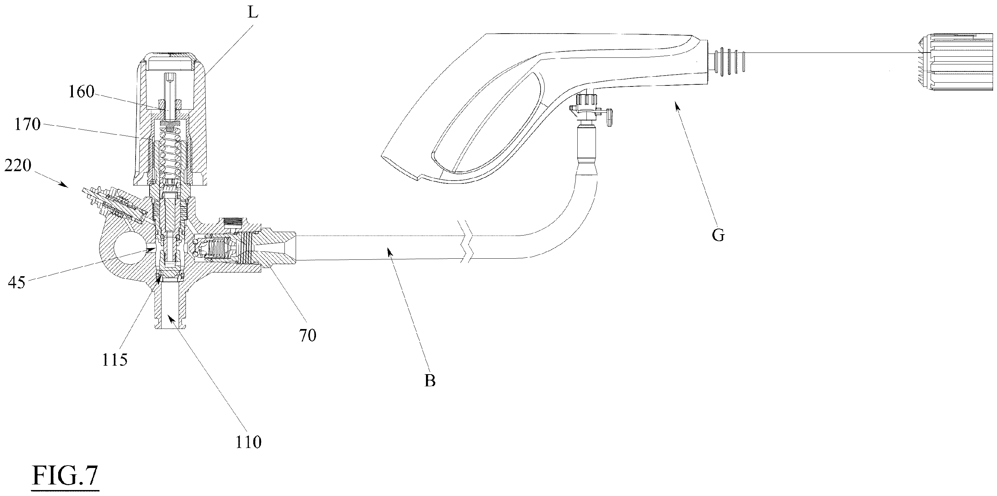

In particular, as for example depicted in Figure 7, the coupling sleeve 70 can be adapted to be interposed between said second chamber 50 and the outlet duct B to place them in fluidic communication.

The coupling sleeve 70 can have an annular jacket, i.e. closed on itself in a loop, around a central axis that delimits an inner cavity 75 developing along said central axis.

The coupling sleeve 70 can close the second chamber 50 at one end.

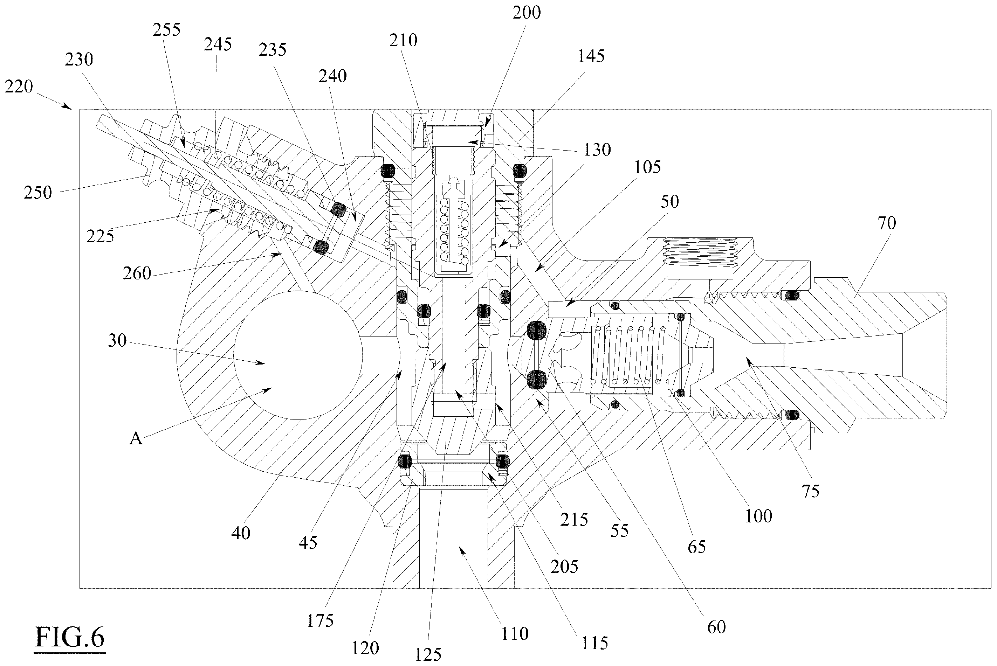

In particular, as better visible in Figure 6, the coupling sleeve 70 can be rigidly attached (for example screwed) to the valve body 40 (for example directly connected to a respective one of said ways thereof), in correspondence of the second chamber 50.

In particular, as visible in Figure 6, the coupling sleeve 70 can have a first portion that extends inside the second chamber 50, and a second portion that (closes the second chamber 50 and) protrudes partially outside the second chamber itself, for example outside the valve body 40, to which the outlet duct B (and therefore, i.e. through it, the delivery device G) is fluid-tightly connected.

The inner cavity 75 of the coupling sleeve 70, for example, can be adapted to be placed in fluidic (continuous and constant) communication with said outlet duct B.

The second chamber 50, for example, may then be adapted to be placed in fluidic communication with said outlet duct B by means of the inner cavity of the coupling sleeve 70. The first resilient element 65 can be comprised (i.e. interposed) and compressed between the coupling sleeve 70 and the first shutter body 60, for example partially contained in the inner cavity 75 of the latter.

In particular, as better visible in Figure 6, the first resilient element 65 (i.e. said spring) can be inserted into the inner cavity 75 of the coupling sleeve 70 and placed in abutment on a abutment surface 100 provided therein, for example made available by an annular body inserted into the inner cavity 75 of the coupling sleeve 70 and attached therein, substantially defining an inner shoulder that defines an axial narrowing of the inner cavity 75 of the coupling sleeve 70.

More in detail, the first shutter body 60 can generally have the shape of a cup, the mouth of which can preferably be inserted into the coupling sleeve 70, i.e. into the inner cavity 75 thereof, and slides remaining (preferably in any position) at least partially perimetrically wrapped (preferably with reduced clearance) by the coupling sleeve 70 (i.e. at least partially inserted into the central cavity 75 thereof) during the movement between the closed position and the open position. The first shutter body 60 can then have a plurality of communication ports, for example formed in a pass-through manner on the annular wall of the cup-shaped body of the first shutter body 60, by means of which the inner cavity of the first shutter body 60 (and the inner cavity of the coupling sleeve 70) is in fluidic communication with the second chamber 50.

The inner cavity defined by the cup-shaped body of the first shutter body 60 is, therefore, in fluidic communication with the inner cavity 75 of the coupling sleeve 75 (and by means of this adapted to be placed in fluidic communication with the outlet duct B and the delivery device G).

A sealing gasket, which is fitted onto the (cup-shaped) body of the first shutter body 60 and preferably partially inserted in an annular groove made thereon, can be associated with the first shutter body 60.

This sealing gasket is in particular intended to ensure the fluidic seal when the first shutter body 60 is in the closed position.

In an alternative not illustrated, it is possible to provide that the first shutter body 60 may be free of communication ports adapted to place the second chamber in fluidic communication with the inner cavity 75 of the coupling sleeve (to place the second chamber with 50 in fluidic communication with the outlet duct B) and that the coupling sleeve 70 may comprise at least one passage duct (for example a plurality of passage ducts each of which is) passing through an annular jacket of the coupling sleeve in a transverse direction with respect to a central axis thereof and opening into the inner cavity 75 to place the second chamber 50 in communication with the inner cavity 75 in order to (i.e. adapted to) place the second chamber 50 in fluidic communication with the outlet duct B.

The valve assembly 35 may further comprise a discharge duct 110, which is in fluidic communication with the first chamber 45 via a second valve seat 115.

The discharge duct 110 can be formed (at least partially) in the same body in which the first chamber 45 is formed, for example in the valve body 40.

Preferably, the discharge duct 110 is adapted to place the first chamber 45 in communication with the inlet manifold 25 of the pump 10 (for example by means of a respective one of said ways of the shutter body 40 which is connected to the inlet manifold 25).

However, it is not excluded that, in other embodiments, the discharge duct 110 can place the first chamber 45 in communication with other low pressure volumes, for example with the tank of the liquid to be pumped.

For example, as better visible in Figure 6, the second valve seat 115 can be formed by a separate annular body 120 that is inserted inside the first chamber 45, possibly with the interposition of special sealing gaskets and attached inside the valve body 40.

Within the first chamber 45 there is housed a second shutter body 125, which is movable between a closed position, in which it closes the second valve seat 115 preventing communication between the first chamber 45 and the discharge duct 110, and an open position, in which it opens the second valve seat 115, allowing such communication.

The valve assembly 35 further comprises a third chamber 130, separated from the first chamber 45 and in constant (and continuous) fluidic (i.e. hydraulic) communication with the second chamber 50.

For example, the third chamber 130 and the second chamber 50 may be in fluidic communication with each other via a connection duct 135.

Said connection duct 135 can be obtained (at least partially) in the valve body 40 itself. The connecting duct 135, in particular, opens at one end on the second chamber 50 and at the opposite end on the third chamber 130.

The third chamber 130 substantially defines an extension of the second chamber 50 being in constant fluidic communication therewith.

Since the third chamber 130 and the second chamber 50 are in (constant and) continuous fluidic communication, the pressure inside said (second and third) chambers is the same. The third chamber 130 is partially delimited by a sliding plunger 140, which is rigidly attached to the second shutter body 125 so that the pressure of the fluid in the third chamber 130 tends to move the second shutter body 125 towards the open position of the second valve seat and therefore of communication between the first chamber 45 and the discharge duct 110.

More in detail, the plunger 140 can be slidably housed inside a cylinder 145 inserted inside the valve body 40 and rigidly attached thereto (for example inserted in a respective one of said ways of the valve body 40 and attached at the same), and said cylinder 145 is provided with a bottom wall separating the first chamber 45 from the third chamber 130. In the illustrated example, the cylinder 145 is formed in a separate body with respect to the body in which the first chamber 45 is formed, in this case with respect to the valve body 40, and can be rigidly joined (i.e. attached) to the latter, for example, by means of a threaded connection and preferably with the interposition of special sealing gaskets.

In particular, the plunger 140 can have a shoulder 140a that closes the third chamber 130 above, i.e. in an opposite position with respect to the first chamber 45.

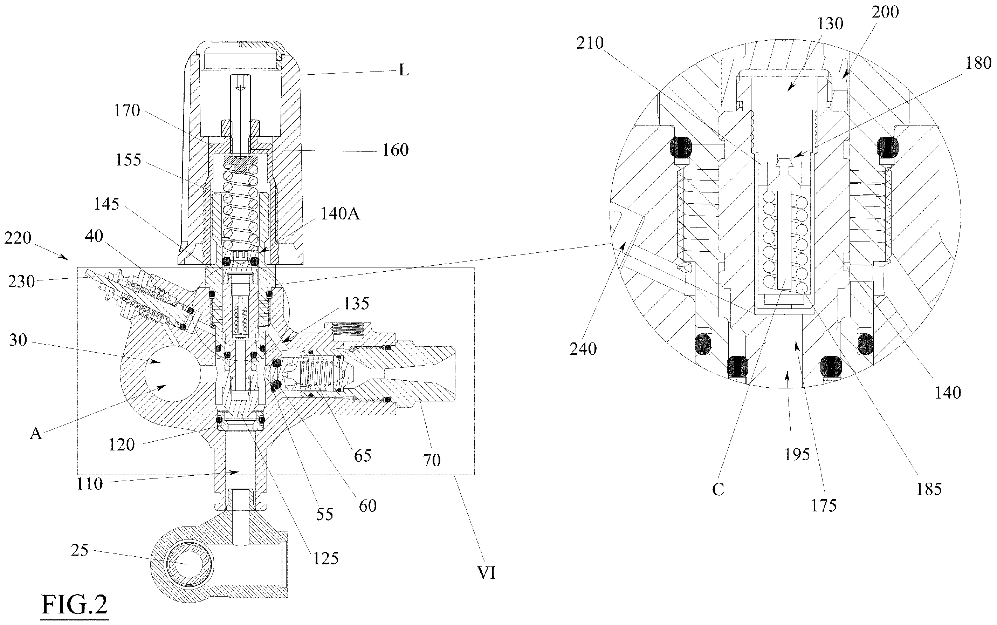

For example, as better visible in Figure 2, said shoulder 140a can be inserted to size inside the cylinder 145 and from said shoulder 140a a neck (i.e. a cylindrical section that defines a shrinkage) of the plunger 140 departs (i.e. develops) which is wrapped by one or more sealing gaskets that ensure the fluidic seal thereby ensuring the fluidic seal inside the third chamber 135.

As can be understood from the attached figures, the plunger 140 can be formed in several parts, for example two in number, which are then constrained to each other (for example screwed or mutually connected by means of shape coupling with interference or other) to make the development of the plunger 140 available as a whole.

For example, with reference to the attached figures, the plunger 140 can have an upper part that makes available said shoulder and said collar and a lower part, which for example makes available a greater portion of the overall development of the plunger, and said upper part and said lower part are (mutually) attached (for example removably) and integral in movement with each other.

The connection duct 135 can therefore open onto the third chamber 130 by means of a communication port formed (for example as a through hole) in the cylinder 145.

The second shutter body 125 can be rigidly connected to the plunger 140, at an end thereof arranged at the first chamber 45.

In particular, the plunger 140 slidably fits into a through hole obtained in the bottom wall of the cylinder 145, to which one or more sealing gaskets are preferably associated which are adapted to ensure that the first chamber 45 and the third chamber 130 remain hermetically separated, so as to open into the first chamber 45.

In particular, it can be provided that the plunger 140 can be connected to the second shutter body 125 in a removable manner, for example by means of a threaded connection. More in detail, the second shutter body 125 can generally have the shape of a cup-shaped body, a mouth (for access to a cavity defined by said cup-shaped body) of which is attached (fluid-tightly), for example screwed to the plunger 140 (for example at said end of the plunger housed in the first chamber 45).

The third chamber 130 can, therefore, be in fact delimited between the plunger 140 and the cylinder 145.

For example, the third chamber 130 is closed at the top by said shoulder of the plunger 140, at the bottom by the bottom wall of the cylinder and by the plunger 140 inserted in the through hole (with sealing gaskets) in the bottom wall of the cylinder 145.

Between the shoulder and the bottom wall of the cylinder 145 (i.e. in the space that passes between them), the plunger 140 can be inserted with clearance inside the cylinder 145, i.e. so that a gap remains defined between the two, so that it is at least partially surrounded by the third chamber 130.

Such clearance is not visible in the accompanying figures.

The valve assembly 35 then comprises a second resilient element 155, for example a spring (particularly a compression spring), which is adapted to push the second shutter body 125 towards the closed position of the second valve seat 115 and therefore of the discharge duct 110.

In particular, said second resilient element 155 (i.e. said spring, for example said compression spring) is configured to push the second shutter body towards (and possibly into) the closed position in contrast to the pressure present in the third chamber 130.

In particular, the valve assembly 30, for example, as will become clear hereinafter, can comprise means for regulating the preload of the second resilient element 155, i.e. the compression spring.

In the illustrated example, this second resilient element 155 is positioned on the opposite side of the plunger 140 with respect to the second shutter body 125, and outside the third chamber 130.

In particular, the second resilient element 155 can be partially housed in the cylinder 145 and be interposed between the plunger 140, i.e. said shoulder 140a thereof, and an abutment element 160 rigidly connected to the cylinder 145.

Said abutment element 160, as for example visible in figure 2, can be shaped as a pin (for example coaxial to the plunger 140), and can be rigidly attached to a connection body 170, which can in turn be attached on the cylinder 145, for example screwed thereto.

For example, the second resilient element 155 as better visible in Figure 2 lies on (i.e. is placed in abutment on) said abutment element 160 by means of the interposition of a plate.

More in detail, the abutment element 160 can be coupled to the connection body 170 by means of a threaded connection, in such a way that, by screwing or unscrewing the abutment element 160 with respect to the connection body 170, it is possible to cause an axial displacement of the abutment element in the sliding direction of the plunger 140, by varying the pre-compression of the second resilient element 155 and, therefore, the force with which the second shutter body 125 is pushed towards the closed position.

The connection body 170 can in turn be coupled to an external protective cover L, for example by means of a coupling of male hexagon-female hexagon shape, such as to be integral in screwing/unscrewing thereto.

Said abutment element 160 and said connection body 170 (with said cover L) can therefore make available said means for regulating the preload of the second resilient element 155, i.e. of said (compression) spring.

Thanks to these means for regulating the preload of the second resilient element 155, it is possible to regulate, in essence, a limit pressure value in the second chamber 50 (and thus in the third chamber 130 which is in constant fluidic communication with the second chamber 50) beyond which the second shutter body 125 (connected to the plunger 140), in contrast to the force of the second resilient element 155, moves from the respective closed position to an open position, opening the communication between the first chamber 45 and the discharge duct 110.

The valve assembly 35 further comprises an additional chamber 175 which can be placed in fluidic communication with the third chamber 130 by means of an additional valve seat 180.

The valve assembly 35 can therefore comprise an additional shutter body C which is housed in the additional chamber 175 where it is movable between a respective closed position, in which it closes the additional valve seat 180 (and thus prevents fluidic communication between the third chamber and the additional chamber 175), and a respective open position, in which it opens the additional valve seat 180 (and allows fluidic communication between the third chamber and the additional chamber).

The shape of the additional shutter body C, i.e. of the portion thereof adapted to close the additional valve seat, can be any, for example it can have a spherical frustoconical conical shape or any other shape as long as it is suitable for the purpose of, in the closed position, closing the additional valve seat (so as to prevent fluidic communication through it).

As better visible in the enlargement of Figure 6, the additional chamber 175 may be in fluidic communication with the second chamber 50 by means of the third chamber 130, i.e. by means of the additional valve seat 180 and by means of the third chamber 130.

More in detail, by means of the additional valve seat 180 the additional chamber 175 can be in fluidic (direct) communication with the third chamber 130 and, therefore, in fluidic communication (indirect, that is), with the interposition of the third chamber 130, with the second chamber 50.

The additional chamber 175, moreover, may be in fluidic (e.g. direct and preferably constant and continuous) communication with the first chamber 45.

The valve assembly 35 therefore comprises an additional resilient element 185 (for example housed in the additional chamber and) adapted to push the additional shutter body C towards the closed position.

In particular, it is possible to provide that the additional shutter body C is positioned (pushed by the additional resilient element 185) in the closed position if the pressure difference between upstream and downstream of the additional shutter body itself (considering the additional chamber 175 downstream) is less than or equal to a threshold value while it is positioned in the open position if the pressure upstream of the additional shutter body C is greater than the downstream pressure of the additional shutter body C, and the pressure difference assumes a value greater than said threshold value.

In other words, the additional shutter body C is positioned (pushed by the additional resilient element 185) in the closed position if the pressure difference between the second chamber 50 and the additional chamber 175, i.e. between the third chamber 130 (which is in constant communication with the first chamber and therefore at the same pressure) and the additional chamber 180, is less than or equal to a threshold value, while it is positioned in the open position if the pressure in the second chamber 50 (i.e. the pressure in the third chamber 130) is greater than the pressure in the additional chamber 175 and the pressure difference assumes a value greater than said threshold value.

Such an additional shutter body C can remain in the closed position, as will become clearer hereinafter, pushed by the additional resilient element 185, as long as the first shutter body 60 is in the open position for the delivery of the fluid (for example by the delivery device G).

When delivery is instead terminated, i.e. when the first shutter body 60 moves to the closed position, the fluid that is not delivered causes a rise in the pressure value in the second chamber 50 (and likewise in the third chamber 130 in constant fluidic communication therewith).

In such a situation, with the first shutter body 60 in the respective closed position, the additional shutter body C is positioned, in contrast to the additional resilient element 185, in the open position when the pressure difference between (upstream and downstream of the additional shutter body C, considering the additional chamber downstream, i.e., between) the second chamber 50 and the additional chamber 175 (i.e., for example, between the third chamber 130 and the additional chamber 180) moves above said threshold value, i.e., when the pressure in the second chamber 50 (i.e., in the third chamber 130) is greater than the pressure in the additional chamber 175 and the pressure difference between the second chamber 50 (i.e., the third chamber 130) and the additional chamber 175 assumes a value greater than said threshold value.

Thereby, some of the fluid is discharged from the second chamber 50 (passing from the third chamber 130) into the additional chamber 175, causing a decrease in the pressure value in the second chamber 50 (and likewise in the third chamber 130).

When the pressure difference between (upstream and downstream of the additional shutter body C, i.e. between) the second chamber 50 (i.e. the third chamber 130) and the additional chamber 175 returns to the threshold value, the additional shutter body C returns from the open position to the closed position (and remains in said position), pushed by the additional resilient element 185.

In practice, the force exerted by the additional resilient element 185 on the additional shutter body C when the latter is in the closed position is such that it equals the threshold value.

When, however, the pressure in the second chamber 50 (i.e. in the third chamber) is greater than the pressure in the additional chamber 175 and the pressure difference between the second chamber 50 (i.e. the third chamber 130) and the additional chamber 175 rises above the threshold value, this overcomes the spring force of the additional resilient element 185, pushing the additional shutter body C from the closed position to the (i.e. Into an) open position.

Preferably, the additional chamber 175 can be in continuous (and constant) fluidic communication with the first chamber 45.

Therefore, in use, the pressure in the additional chamber 175 is equal to the pressure in the first chamber 45.

In this case, the additional shutter body C can be positioned in the closed position if the difference in (value of) pressure between the second chamber 50 (i.e. the third chamber 130) and the first chamber 45 (in this order) is equal to or less than the threshold value, or in the open position if the difference in (value of) pressure between the second chamber 50 (i.e. the third chamber 130) and the first chamber 45 (in this order) is (i.e. assumes a value) greater than the threshold value (i.e. if the pressure in the second chamber 50, and thus likewise in the third chamber 130, is greater than the pressure in the first chamber and the pressure difference is greater than the threshold value).

This threshold value may be greater than atmospheric pressure, i.e. greater than 1 bar. It is not excluded that possibly this threshold value may be less than 1, i.e. substantially equal to 0, i.e. that the additional shutter body may be positioned in the closed position (and remain in this closed position) if the third chamber (i.e. the second chamber) and the additional chamber are substantially at the same pressure, and that it may move into the open position if the pressure in the third chamber (i.e. in the second chamber) becomes greater than the pressure in the additional chamber.

Preferably, such a threshold value can be greater than 5 bar, e.g. comprised between 6 and 70 bar.

In particular, such a threshold value can preferably be greater than 15 bar, e.g. be greater than 25 bar, e.g. be comprised between 26 bar and 70 bar (extremes included), preferably be greater than or equal to 30 bar, e.g. be comprised between 31 and 70 bar (extremes included).

For example, such a threshold value can preferably be comprised between 31 and 60 bar (extremes included), even more preferably comprised between 40 bar and 60 bar (extremes included), even more preferably comprised between 45 bar and 55 bar (extremes included), for example such a threshold value can be substantially 50 bar.

For example, such a threshold value can be basically equal to a value comprised between 40% and 60% of a pressure limit value for fluid delivery (e.g. by the delivery device G).

Such a pressure limit value identifies a pressure value in the second chamber, and thus in the third chamber, above which the second shutter body 125 moves to an open position so that at least part of the fluid can be discharged into the discharge duct 110.

Again, such a threshold value can be independent of the preload value of the second resilient element 155, i.e. the threshold value does not vary with the variation of the preload of the second resilient element 155.

Such an additional chamber 175, as better visible in Figure 6, can be at least partially formed inside the plunger 140.

For example, the additional chamber 175 can be at least partially formed in the plunger 140 and at least partially formed in the second shutter body 125.

In particular, the plunger 140 can comprise (i.e. have) an internal channel 195, which has a (preferably single) inlet port 200, for example made as a through hole in the annular body 190 of the plunger, by means of which it is in fluidic (continuous) communication with (a portion of) the third chamber and a (preferably single) discharge port 205 which opens at the second shutter body 125.

In practice, such an internal channel 195 of the plunger 140 opens by means of said discharge port 205 into the cavity defined by the cup-shaped body of the second shutter body 125 attached to the plunger itself.

Such an internal channel 195 of the plunger thus makes a portion of the third chamber 130 available, which is, for example, in communication with the rest of the third chamber 130 by means of said inlet port 200, and (at least) partially (i.e. a portion of) the additional chamber 175.

Said additional valve seat 180 separating the third chamber from the additional chamber 175 is provided inside the internal channel 195 of the plunger.

For example, said additional valve seat 180 can be formed directly on the plunger 140, for example in the form of a shoulder formed in the internal channel 195 defining an axial narrowing thereof, or, as visible in the accompanying figures, it can be made available by a valve body 210 (e.g. hollow, i.e. provided with a through cavity) which is distinct from the plunger and inserted therein, preferably attached thereto (e.g. screwed), i.e. inserted in the internal channel 195.

In practice, for example, it is possible to envisage that said valve body 210, i.e. said through cavity of the valve body 210, can make a section of a flow path available for the fluid along the internal channel 195 of the plunger 195, and that said additional valve seat can be arranged along the through cavity of the valve body 210, i.e. defined by a shoulder provided in the through cavity to define an axial (localised) narrowing thereof.

The additional resilient element 185, e.g. said spring, is interposed (and compressed) between the additional shutter body C, i.e. an abutment surface made available therefrom, and an abutment surface arranged in the internal channel 195 of the plunger 140 so as to push the additional shutter body C towards the respective closed position.

For example, said abutment surface can be formed directly in the plunger 140, e.g. from a shoulder formed in the internal channel 195 of the plunger, or, as illustrated, it can be made available by said valve body 210 inserted and attached in the internal channel 195 of the plunger 140 (or, for example, be made available by another, preferably localised, axial narrowing of the through cavity of the valve body 210).

In practice, the valve assembly 30 can optionally comprise said valve body 210 which makes said additional valve seat available, the additional shutter body C and the additional resilient element are inserted inside the valve body 210 (i.e. in its through cavity), and said valve body is inserted inside the plunger 140, i.e., in the internal channel 195 thereof (e.g., with the through cavity of the valve body 210 which, downstream of the additional valve seat 180, i.e., in a position opposite the third chamber, opens onto the internal channel of the plunger).

The additional chamber 175 comprises (e.g. substantially in a position opposite the additional valve seat 180) an outlet port 215 by means of which it is in fluidic communication (direct and preferably continuous) with the first chamber 45.

For example, such an outlet port 215 can be made in the second shutter body 125 (and, for example, places in fluidic communication, e.g. direct, the cavity defined by the cup-shaped body thereof with the first chamber).

In practice, such an additional chamber 175 comprises a first section formed in the plunger 140, i.e. made available by a section of said internal channel 195 of the plunger 140 (which, for example, can possibly be made partially available by the through cavity of the valve body 210), and a second section contiguous to the first section and in fluidic (continuous) sealed communication therewith, made in the second shutter body 125 and, for example, substantially defined by the cavity formed (i.e. made available) by the cup-shaped body of the second shutter body 125.

Such an outlet port 215 of the additional chamber 175 can then be made by a through-hole made in the second shutter body 125, and which places the additional chamber 175 in communication (exclusively) with the first chamber 45.

It is not excluded, however, that in other, non-illustrated embodiments the additional chamber 175 can optionally be defined (solely or entirely) in the plunger 140, i.e. that it can be made available by (a section of) said internal channel, and that said outlet port 215 can be formed in the plunger (at the first chamber 45).

The valve assembly may optionally further comprise an actuating system 220 adapted to selectively switch off said motor M actuating the pump 10.

In particular, as will become clear hereinafter, the actuating system 220 can be configured to switch off said motor actuating the pump 10 when the pressure in the second chamber 50 (i.e., the pressure value in the second chamber) is greater than the pressure in the first chamber 45 (i.e., the pressure value in the first chamber) and the pressure difference between the second chamber 50 and the first chamber 45 is (i.e., assumes a value) greater than or equal to a critical value.

Such a critical value is lower than the threshold value.

For example, a difference of at least 1 bar can be envisaged between the threshold value and the critical value, e.g. a difference preferably comprised between 2 and 40 bar, e.g. a difference of at least 10 bar, e.g. a difference even more preferably comprised between 10 and 35 bar (extremes included).

For example, it is possible to envisage that said critical value could have a value comprised between 1 bar and 25 bar (extremes included), for example comprised between 15 bar and 30 bar (extremes included), even more preferably comprised between 15 bar and 25 bar (extremes included).

As, for example, better visible in Figure 6, the valve assembly 35 can comprise a coupling duct 225, for example made particularly available by the valve body 40 or by one of said ways thereof, and said actuating system 230 is at least partially housed in said coupling duct 225.

The actuating system 220 comprises an actuating rod 230 slidably movable within said coupling duct 225 between a rest position, in which it does not interact with a switch S for switching off the motor M actuating the pump 10 (the switch S and the motor M being illustrated only schematically in the accompanying figures), and a trigger position in which it is adapted to actuate (i.e., it presses on) said switch S for switching off the motor M actuating the pump 10 (so as to switch off the actuating motor itself).

In particular, the actuating rod 230 comprises a first axial end inserted inside the coupling duct 225 on which a sealing gasket 235 is provided, such that the actuating rod 230 (fluid) sealingly slides inside the coupling duct 225 between the rest position and the trigger position.

A second axial end of the actuating rod 230 exits from the coupling duct 225 and is adapted to contact said switch S for switching off when the actuating rod 230 is in the trigger position.

The first axial end of the actuating rod provided with said annular sealing gasket 235 closes inside the coupling duct 225 a fourth chamber 240, which remains defined between said first axial end of the actuating rod (with the sealing gasket 235) and an axial end of the coupling duct 225 opposite that from which the actuating rod 230 exits, which is in continuous and constant fluidic communication with the third chamber (and therefore with the second chamber 50, for example by means of a duct obtained in the tubular body 40 which places the fourth chamber 240 in continuous fluidic communication with the third chamber 130).

The actuating system 230 then comprises an elastic element 245 configured to push the actuating rod 230 into the rest position, in particular in contrast to the pressure in the fourth chamber 240 (which is equal to the pressure in the third chamber 130 which is in turn equal to the pressure in the second chamber 50).

For example, such an elastic element 245 can be a compression spring.

In more detail, as better visible in Figure 6, the valve assembly 35 can comprise a clamping sleeve 250 attached to the valve body 40, at said coupling duct 225 to close the same. More precisely, the clamping sleeve 250 has an annular jacket, i.e. closed onto itself in a loop, around a central axis that delimits a respective internal cavity extending along said central axis.

Such a clamping sleeve 250 can be rigidly attached (e.g. screwed) to the valve body 40 (e.g. directly connected to one of said ways thereof), at the coupling duct 225.

In particular, as visible in such Figure 6, the clamping sleeve 250 can have a first portion extending inside the valve body 40, i.e., inside said coupling duct 225, and a second portion partially protruding outside the valve body 40, i.e., outside the coupling duct 225, and closing said coupling duct 225 at one end.

Said end of the actuating rod 230, adapted to contact the switch S for switching off the motor M actuating the pump, fits (in a fluid-tight manner) into a through hole formed in a bottom part of the clamping sleeve 250 so that it protrudes outside the clamping sleeve itself.

A fifth chamber 255 remains defined between the clamping sleeve 250 and said first axial end of the actuating rod 230 provided with said annular sealing gasket 235, in a position opposite the fourth chamber 240.

In practice, said first axial end of the actuating rod 230 with the sealing gasket 235 divides a space made available overall by the clamping sleeve 250 and the coupling duct 225 in said fourth chamber and said fifth chamber, fluid-tightly separating them.

Such an elastic element 245 can then be inserted within the fifth chamber 255 and be included (i.e. interposed) and compressed between the clamping sleeve 250 and the actuating rod 230.

In particular, such an elastic element 245 can be inserted in said fifth chamber 255 and have a first axial end placed abutting on an abutment surface made available by the clamping sleeve 250 and an opposite axial end made available by the actuating rod 230, for example made available by a shoulder of the actuating rod 230 defining a localised enlargement thereof.

The fifth chamber 255 is in constant and continuous communication with the first chamber 45, in particular by means of a communication channel 260, e.g. obtained (dug) in the valve body 40, which opens on one side at the fifth chamber 255 and on the other side at the first chamber 45.

The actuating rod 230 is movable from the rest position to the trigger position, in contrast to the force exerted by the elastic element 245 (e.g. Said compression spring), due to the pressure in the fourth chamber 240 (and thus in the third chamber and in the second chamber 50, the fourth chamber 240 being in constant fluidic communication therewith). In particular, the actuating rod 230 is movable from the rest position to the trigger position if the pressure in the fourth chamber 240 (i.e. In the third chamber, i.e. In the second chamber) is greater than the pressure in the fifth chamber 255 (i.e. In the first chamber 45) and the difference in (value of) pressure between the pressure in the fourth chamber 240 (i.e. the third chamber 130, i.e. the second chamber 50) and the pressure in the fifth chamber 255 (i.e. the first chamber 45) is greater than said critical value.

In practice, since the fourth chamber 240 is in constant and continuous fluidic communication with the third chamber and thus with the second chamber, and the fifth chamber 255 is in constant and continuous fluidic communication with the first chamber, the actuating rod 230 is movable from the rest position to the trigger position if the pressure in the second chamber 50 is greater than the pressure in the first chamber 45 and the difference in (value of) pressure between the pressure in the second chamber 50 and the pressure in the first chamber 45 is greater than said critical value.

Such a critical value (as mentioned above) is less than the threshold value (i.e. whatever the threshold value is, the critical value is less than it).

The operation of the valve assembly 35 described above will be described below starting from the condition in which the motor M actuating the pump 10 is switched off and the pump 10 is stopped.

In this condition, see Figure 2, the first shutter body 60, the second shutter body 125 and the additional shutter body C are all in the respective closed position.

When the actuating motor M is started, the pistons of the pump 10 immediately start pumping at least a small amount of fluid from the inlet manifold 25 to the delivery manifold 30.

As the motor M rotation speeds increase, the flow rate of fluid being pumped into the first chamber 45 of the valve assembly 35 also increases.

Part of said fluid obviously fills the fifth chamber 255.

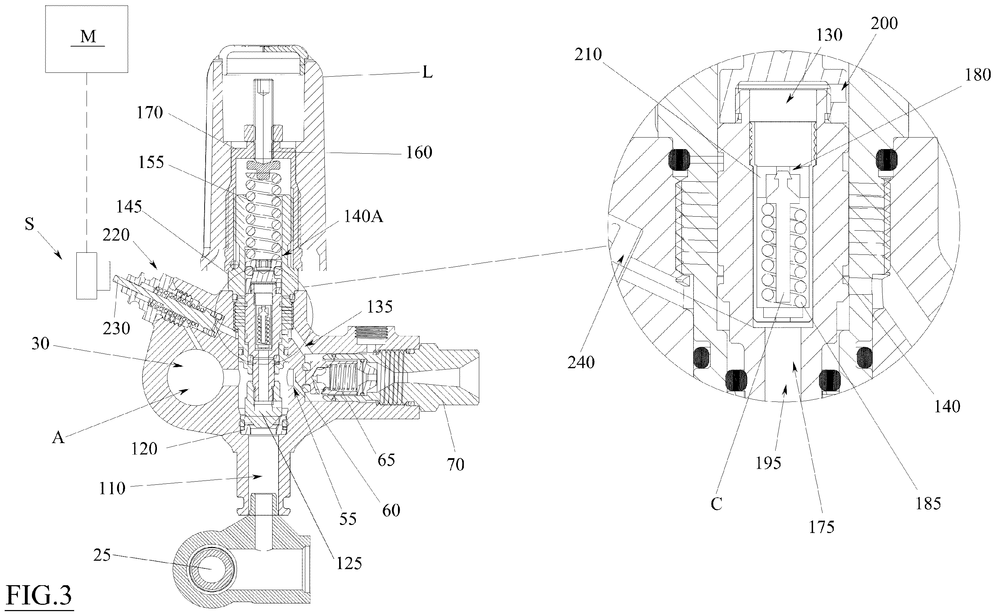

At this point, see Figure 3, the pumped fluid pushes the first shutter body 60 towards the open position, in contrast to the action of the first resilient element 65, thus flowing into the second chamber 50 and from here, possibly into the coupling sleeve 70 to reach the outlet duct B, for example towards the delivery device G from which it exits.

During fluid delivery, part of the fluid reaching the second chamber comes to fill the third chamber 130 and the fourth chamber 240 by means of the connecting duct 135.

Preferably, the preload of the second resilient element 155 can be regulated in such a way that, during the delivery of the fluid (i.e. with the first shutter body in the open position) the pressure in the third chamber 130, by virtue of the greater area made available by the plunger 140 in the third chamber 130 than that made available by the same in the first chamber 45, is able to overcome the force exerted on the plunger 140 by the second resilient element 155 and by the pressure in the first chamber 45, so as to at least slightly move the second shutter body 125 away from the second valve seat 115 allowing a smaller part of the fluid pumped by the pump 10 to reach the discharge duct 110.

During such fluid delivery, the first chamber 45 and the second chamber 50 are essentially placed at the same pressure (i.e. at the same pressure value).

Likewise, the third chamber 130 the fourth chamber 240 and the fifth chamber 255 are essentially at the same pressure as the second chamber 50.

Therefore, in such a condition the pressure difference between the second chamber 50 and the first chamber 45 (i.e. the pressure difference between the second chamber and the additional chamber 175) is less than the threshold value, therefore the additional shutter body C remains in the closed position, and furthermore the pressure difference between the second chamber 50 and the first chamber 45 is less than the critical value, therefore the actuating rod 230 remains inactive, i.e. the actuating rod 230 remains in the rest position, therefore the motor M actuating the pump 10 remains switched on and continues to actuate the pump 10.

When the fluid delivery is terminated, e.g. when the delivery lance or gun is closed, the fluid, being unable to flow until being delivered, acts on the first shutter body 60 (assisted by the first resilient element, i.e. the spring) so as to bring it to the closed position.

In this situation, i.e. when fluid delivery is terminated (e.g. when the delivery device G is closed), the pressure value in the various communicating chambers, i.e. in the second chamber 50, in the third chamber 130 and in the fourth chamber 240 increases.

In particular, the pressure value in the second chamber 50, and thus in the third chamber 130 and in the fourth chamber 240, first rises to a value such that the pressure difference between the second chamber 50 and (the fifth chamber, i.e.) the first chamber 45 is greater than the critical value.

At this point, the actuating system 230 is actuated, i.e. the actuating rod 230 moves in contrast to the elastic element 245 from the rest position to the trigger position where it presses the switch S for switching off, and switches off the motor M for actuating the pump.

Subsequently, the pressure value in the second chamber 50, and thus in the third chamber 130 and the fourth chamber 240, rises to a value such that the pressure difference between the second chamber 50 and the additional chamber 175, i.e. the pressure difference between the second chamber 50 and the first chamber 45, is greater than the threshold value.

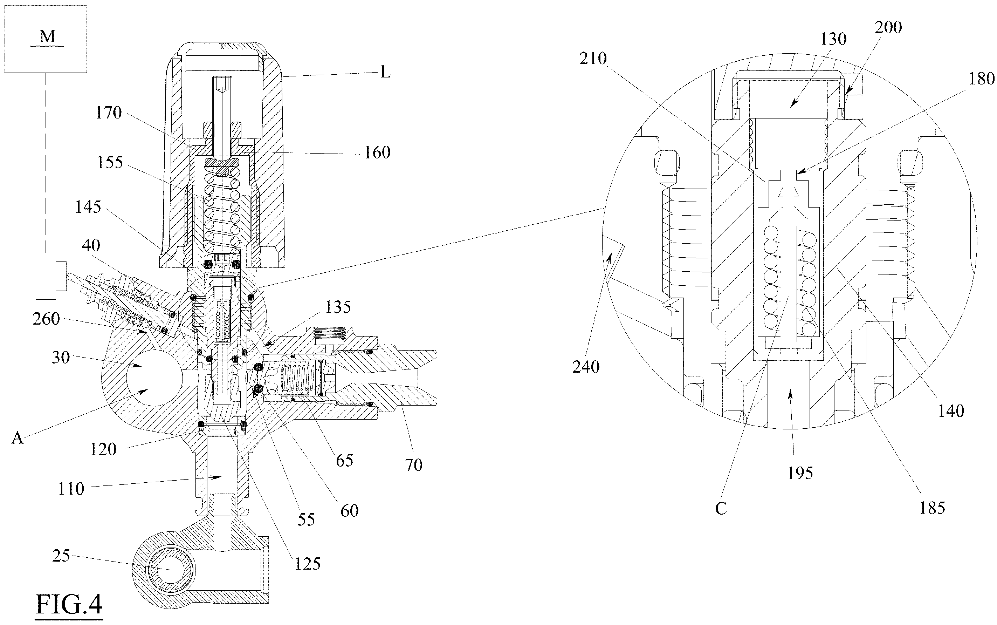

At this point, see Figure 4, the additional shutter body C moves to the respective open position, allowing part of the fluid to flow from the second chamber 50 to the additional chamber, and then to the first chamber 45 (e.g. in particular from the second chamber 50 to the first chamber 45 via the third chamber 130 and the additional chamber 175), and then towards the discharge duct 110, thereby reducing the pressure value in the second chamber 50.

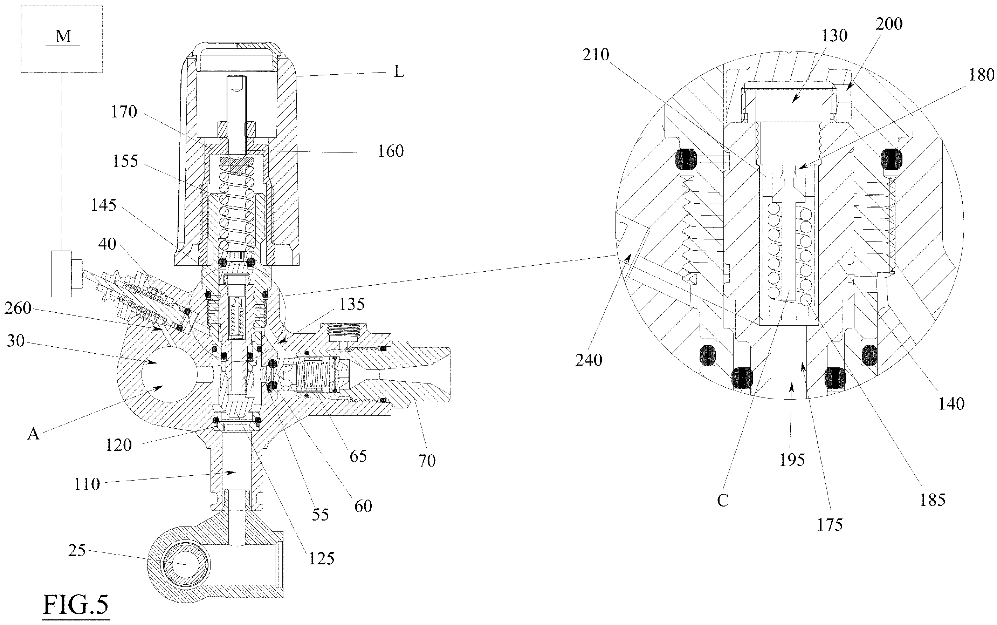

When such a reduction of the pressure value in the second chamber 50 is such that a condition is again reached whereby the pressure difference between (upstream and downstream of the additional shutter body C, i.e. between) the second chamber 50 and the additional chamber 175, i.e., the pressure difference between the second chamber 50 and the first chamber 45, is equal to the threshold value, the additional shutter body C pushed by the additional resilient element 185 returns to the respective closed position (see Figure 5).

It can be noted that in such a condition, the threshold value being greater than the critical value, the pressure in the second chamber 50 is such that the pressure difference between the second chamber 50 and the first chamber 45 is greater than the critical value regardless, so that the actuating system 230 continues to actuate the switch S for switching off the motor M for actuating the pump 10, i.e. the actuating rod 230 remains in the trigger position.

The subsequent demand for delivery, e.g. by opening the delivery device G by means of a trigger or button, causes a sudden drop in pressure in the second chamber, which communicates with the delivery device by means of the coupling sleeve and the outlet duct, until a condition whereby the pressure difference between the fourth chamber and the fifth chamber, i.e. between the second chamber 50 and the first chamber 45, reaches a value below the critical value.

In such a condition, the actuating rod will return to the rest position, uncoupling the switch S for switching off the motor M for actuating the pump 10, which will restart and the operation of the pump 10 will resume as described above.

The invention thus conceived is susceptible to many modifications and variants, all falling within the same inventive concept.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. A valve assembly (35) for pumps (10) comprising:
- a first chamber (45) adapted to be placed in fluid communication with an inlet duct (A),
- a second chamber (50) communicating with the first chamber (45) via a first valve seat (55), the second chamber being adapted to be placed in fluid communication with an outlet duct (B),
- a first shutter body (60) housed in the second chamber (50) and movable between a closed position, in which it closes the first valve seat (55), and an open position, in which it opens the first valve seat (55),
- a first resilient element (65) adapted to push the first shutter body (60) towards the closed position in contrast to the pressure present in the first chamber (45),
- a discharge duct (110) communicating with the first chamber via a second valve seat (115),
- a third chamber (130) communicating with the second chamber (50) and partially delimited by a sliding plunger (140),
- a second shutter body (125) connected to the plunger (140) and housed in the first chamber (45) where it is movable between a closed position, in which it closes the second valve seat (115), and an open position, in which it opens the second valve seat (115), and
- a second resilient element (155) adapted to push the second shutter body (125) towards the closed position in contrast to the pressure present in the third chamber (130),
- an additional chamber (175) at least partially formed in the plunger (140) and placed in fluidic communication with the third chamber (130) by means of an additional valve seat (180), the additional chamber (175) also having an outlet port (215) by means of which it is in fluidic communication with the first chamber (45),
- an additional shutter body (C) housed in the additional chamber (175) where it is movable between a closed position, in which it closes the additional valve seat (180), and an open position, in which it opens the additional valve seat (180), and
- an additional resilient element (185) adapted to push the additional shutter body (C) towards the closed position.

2. The valve assembly (35) according to the preceding claim, wherein the additional chamber (175) is also at least partially formed in the second shutter body (125) and wherein said outlet port (215) is formed in the second shutter body itself.

3. The valve assembly (35) according to claim 1 or 2, wherein the plunger (140) has an inner channel (195) which makes available at least a portion of the third chamber (130) and at least a portion of the additional chamber (175).

4. The valve assembly (35) according to claim 1, wherein the additional chamber (175) is in continuous fluidic communication with the first chamber (45).

5. The valve assembly (35) according to claim 1, comprising a valve body (210) which makes available said additional valve seat (180), and wherein the additional valve body (C) and the additional resilient element (185) are inserted within the valve body (210), said valve body (210) being inserted within the plunger (140).

6. Pump (10) comprising a valve assembly according to claim 1.

7. The pump (10) according to the preceding claim, comprising:
- a pump body (15), defining one or more cylinders, and a cylinder head (20), attached to the pump body (15) and adapted to close one end of each cylinder, with a reciprocating piston being slidably housed inside each cylinder,
- an inlet manifold (25) adapted to be connected to a source of fluid to be pumped,
- a delivery manifold (30) adapted to be connected to a pumped fluid delivery device,
- a motor actuating said one or more reciprocating pistons,
- the valve assembly (35) being connected to the delivery manifold (30) and adapted to receive fluid therefrom.
